# EUROPEAN PATENT APPLICATION

(11) **EP 4 517 979 A1**
(43) Date of publication of application: **05.03.2025**
(21) Application number: 24809533.3
(22) Date of filing: 19.06.2024
(51) Int. Cl.: H01M 50/244, H01M 50/24, H01M 50/289, H01M 50/10, H01L 23/02

(54) **HOUSING, SHELL ASSEMBLY, AND BATTERY**

(30) Priority: 19.06.2023 CN 202321557431 U
(71) Applicant: Eve Power Co., Ltd., Jingmen, Hubei 448000 (CN)
(72) Inventor: WANG, Junmin, Jingmen, Hubei 448000 (CN); SHU, Kuanjin, Jingmen, Hubei 448000 (CN); HE, Xiaowu, Jingmen, Hubei 448000 (CN); AN, Suli, Jingmen, Hubei 448000 (CN); ZHENG, Xu, Jingmen, Hubei 448000 (CN); HUANG, Jinhai, Jingmen, Hubei 448000 (CN); JIA, Yanli, Jingmen, Hubei 448000 (CN); LIN, Zhibing, Jingmen, Hubei 448000 (CN); WU, Xueyin, Jingmen, Hubei 448000 (CN)
(74) Representative: Berggren Oy
(86) International application number: PCT/CN2024/100126
(87) International publication number: WO 2024/260370

(57) **Abstract**

This application discloses a housing, a housing assembly and a battery. The housing includes an insulating base body and a metal frame. The insulating base body has an accommodating cavity. The insulating base body has a mounting side surface. An opening in communication with the accommodating cavity is defined by the mounting side surface. The metal frame is provided around a circumferential portion of the opening and is fixedly connected to the insulating base body. A through hole in communication with the opening is defined by the metal frame. The metal frame is used for connecting a metal cover plate. The metal cover plate plugs the through hole, so that the structural strength of the housing may meet the use requirements.

## Description

This application claims priority to Chinese Patent Application No. 202321557431.9 submitted to the Chinese Patent Office on June 19, 2023, the entire disclosure of the aforementioned application is incorporated herein by reference in its entirety.

### TECHNICAL FILED

The present disclosure relates to the technical field of batteries, and in particularly to a housing, a housing assembly, and a battery.

### BACKGROUND

In order to enable the structural strength of the housing of the battery to meet the use requirements, aluminum is generally used to manufacture the housing.

### SUMMARY

However, when the cell pack drops powder and comes into contact with the housing, it will cause chemical corrosion of the aluminum housing, which will cause the battery to be prone to leakage and the safety of the battery to use is low.

A first purpose of the present disclosure is to provide a housing having a structural strength that satisfies the use requirements and being less susceptible to chemical corrosion.

A second purpose of the present disclosure is to provide a housing assembly having high structural strength and good corrosion resistance by providing the housing.

A third purpose of the present disclosure is to provide a battery capable of having higher safety in use by providing the housing assembly.

In a first aspect, a housing is provided, and the housing includes:
an insulating base body including an accommodating cavity, in which the insulating base body includes a mounting side surface defining an opening in communication with the accommodating cavity; and
a metal frame provided around a circumferential portion of the opening and fixedly connected to the insulating base body, in which a through hole in communication with the opening is defined by the metal frame, the metal frame is configured to be connected to a metal cover plate, and the metal cover plate is configured to plug the through hole.

In a second aspect, a housing assembly is provided. The housing assembly includes a metal cover plate. The housing assembly further includes the housing as described above in the first aspect. The metal frame of the housing is connected to the metal cover plate, and the metal cover plate plugs the through hole.

In a third aspect, a battery is provided. The battery includes a cell pack. The battery further includes the housing assembly as described above in the first aspect. The cell pack is disposed within the housing.

### BENEFICIAL EFFECTS

The beneficial effects of the present disclosure are as follows:
The the insulating base body is formed as a main structure of the housing, and taking advantage of the insulating base body being less susceptible to chemical corrosion, the use safety of the battery including the housing is relatively high. In addition, the structural strength of the housing as a whole may be strengthened by providing a metal frame along the opening, so that the structural strength of the housing may meet the use requirements.

Further, by connecting the metal frame with the metal cover plate, in other words, by connecting the metal cover plate with the metal frame both made of metal material, the metal cover plate is conveniently fixed to the metal frame by welding, the connection stability between the metal cover plate and the metal frame is good, and the sealing performance of the metal cover plate plugging the through hole is also good.

### BRIEF DESCRIPTION OF THE DRAWINGS

The present disclosure will be described in further detail below with reference to the accompanying drawings and the embodiments of the present disclosure.
FIG. 1 is a schematic view of a three-dimensional structure of a housing provided by some embodiments of the present disclosure.
FIG. 2 is a first structural schematic view of of a housing provided by some embodiments of the present disclosure.
FIG. 3 is a second structural schematic view of the housing provided by some embodiments of the present disclosure.
FIG. 4 is a third structural schematic view of the housing provided by some embodiments of the present disclosure.
FIG. 5 is a fourth structural schematic view of the housing provided by some embodiments of the present disclosure.

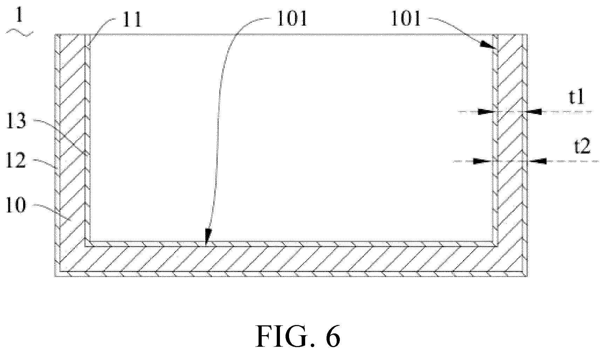

FIG. 6 is a fifth structural schematic view of the housing provided by some embodiments of the present disclosure.
FIG. 7 is a schematic view of a three-dimensional structure of a housing assembly provided by some embodiments of the present disclosure.
FIG. 8 is a structural exploded schematic view of the housing assembly provided by some embodiments of the present disclosure.
FIG. 9 is a schematic view of a three-dimensional structure of a battery provided by some embodiments of the present disclosure.
FIG. 10 is a structural exploded schematic view of the battery provided by some embodiments of the present disclosure.

In the figures:
1, housing; 10, insulating base body; 10a, accommodating cavity; 100, opening; 101, inner wall surface;
102, mounting side surface; 11, metal frame; 110, through hole; 12, first metal layer; 13, second metal layer;
2, housing assembly; 20, metal cover plate;
3, battery; 30, cell pack.

### DETAILED DESCRIPTION

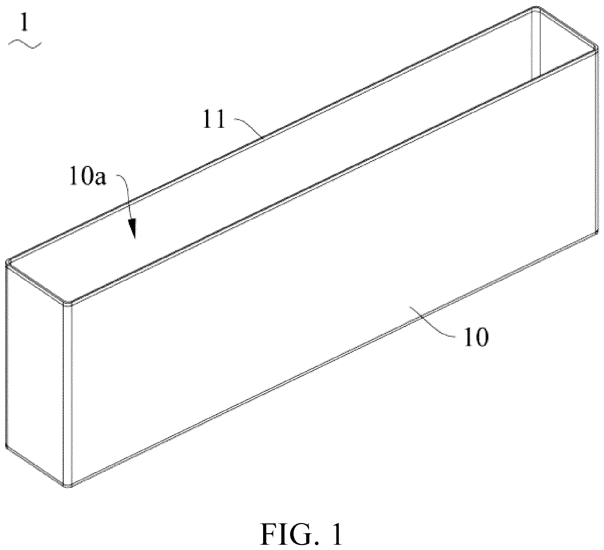

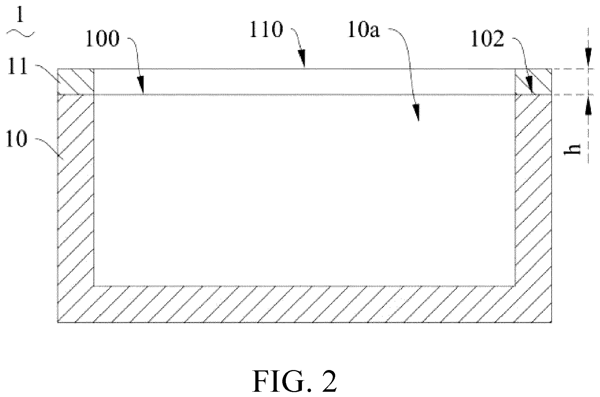

As shown in FIGS. 1 and 2, the present disclosure provides a housing 1 including an insulating base body 10 and a metal frame 11. The insulating base body 10 has an accommodating cavity 10a. The insulating base body 10 has a mounting side surface 102 provided with an opening 100 in communication with the accommodating cavity 10a. A metal frame 11 is provided around a circumferential portion of the opening 100 and is fixedly connected to the insulating base body 10. A through hole 110 in communication with the opening 100 is formed in the metal frame 11. The metal frame 11 is used for connecting a metal cover plate, and the metal cover plate plugs the through hole 110.

The insulating base body 10 may have a thin housing structure to form the main structure of the housing 1 having the accommodation cavity 10a. Taking advantage of the insulating base body 10 being less susceptible to chemical corrosion, the use safety of the battery including the housing 1 is relatively high. In addition, the structural strength of the housing 1 as a whole may be strengthened by providing a metal frame 11 along the opening 100, so that the structural strength of the housing 1 may meet the use requirements.

Further, by providing the metal frame 11 on the insulating base body 10, the metal cover plate may be connected to the metal frame 11. In other words, by connecting the metal cover plate with the metal frame 11 both made of metal materials instead of fixing the metal cover plate to the insulating base body 10 made of a non-metal material, so that the metal cover plate may be easily connected and fixed to the metal frame 11 by welding, the connection stability between the metal cover plate and the metal frame 11 is better, and the sealing performance of the metal cover plate sealing the through hole 110 is also good.

In addition, since the density of the insulating material may be smaller than the density of the metal material, by forming the housing 1 into a composite structure composed of the insulating base body 10 and the metal frame 11, it is possible to achieve a more lightweight design for the housing 1.

The insulating material may be a plastic material that may be molded by injection molding. Based on this, optionally, the insulating base body 10 may be molded on the outer surface of the metal frame 11 by injection molding, thereby simultaneously completing the molding of the insulating base body 10 and the connection between the insulating base body 10 and the metal frame 11, so that the manufacturing process of the housing 1 is simple, and the connection stability between the insulating base body 10 and the metal frame 11 is good.

In other embodiments, the metal frame 11 may be provided on the insulating base body 10 by spraying or gluing.

Alternatively, the metal cover plate may be weakly charged by the cell of the battery, so that the metal frame 11 connected to the metal cover plate is weakly charged to avoid chemical corrosion of the metal frame 11.

It should be noted that the "metal frame 11 is provided around a circumferential portion of the opening 100" aforementioned includes, a case where the metal frame 11 surrounds the circumferential portion of the opening 100 and is provided outside the opening 100, a case where the metal frame 11 surrounds the circumferential portion of the opening 100 and is provided inside the opening 100, or a case where the metal frame 11 surrounds the circumferential portion of the opening 100 and a part of the metal frame 11 is provided inside the opening 100 and the remaining part of the metal frame 11 is provided outside the opening 100.

In some alternative embodiments, the metal frame 11 may project from the mounting side surface 102. The metal frame 11 may surround the circumferential portion of the opening 100 and be provided outside the opening 100, or the metal frame 11 may surround the circumferential portion of the opening 100, and a part of the metal frame 11 may be provided inside the opening 100, and the remaining portion of the metal frame 11 may be provided outside the opening 100, so that the thickness of the metal frame 11 may be no less than the thickness of the insulating base body 10, so that the metal frame 11 has greater structural strength, thereby making the structural strength of the entire housing 1 being greater.

As provided in the aforementioned technical solution, the metal frame 11 may be weakly charged, but since the air pressure inside the housing 1 will increase in condition of the battery being used for a period of time, and the cell of the battery will become thick, causing the housing 1 to expand and deform, when a plurality of batteries are arranged at intervals, the housings 1 of adjacent batteries may come into contact or even squeeze against each other. If the squeeze portion of the housing 1 is provided with the metal frame 11 with electric charge, it will cause the housings 1 of adjacent batteries to conduct electricity to each other and cause a fire. When the housing 1 expands, it is usually the middle of the outer circumference of the housing 1 that protrudes outward to the highest height and is most likely to come into contact with a housing 1 of an adjacent cell.

A protrusion height of the metal frame 11 protrudes from the mounting side surface 102 is h, and the higher the height h, the closer the metal frame 11 is to the middle of the outer periphery of the housing 1 as a whole, and the greater the overall structural strength improvement effect of the metal frame 11 on the entire housing 1 is. When the metal frame 11 is not charged, the possibility of the metal frame contacting the powder falling from the cell pack is greater. When the metal frame 11 is charged, and the housing 1 squeezes against a housing 1 of an adjacent cell after expanding, the possibility of the adjacent metal frames 11 coming into contact and squeeze against each other is greater. However, the smaller the height h, the farther the metal frame 11 is from the middle of the outer periphery of the housing 1 as a whole, and the smaller the overall structural strength improvement effect of the metal frame 11 on the housing 1 is. When the metal frame 11 is not charged, the possibility of the metal frame contacting the powder falling from the cell pack is smaller. When the metal frame 11 is charged, and the housing 1 squeezes against a housing 1 of an adjacent cell after expanding, the possibility of the adjacent metal frames 11 coming into contact and squeeze against each other is smaller. Therefore, the height h may not be too large or too small. Based on this, the height h may optionally meet the requirement of 1 mm ≤ h ≤ 10 mm. For example, the height h may be 1 mm, 2 mm, 3 mm, 4 mm, 5 mm, 6 mm, 7 mm, 8 mm, 9 mm, or 10 mm, etc.

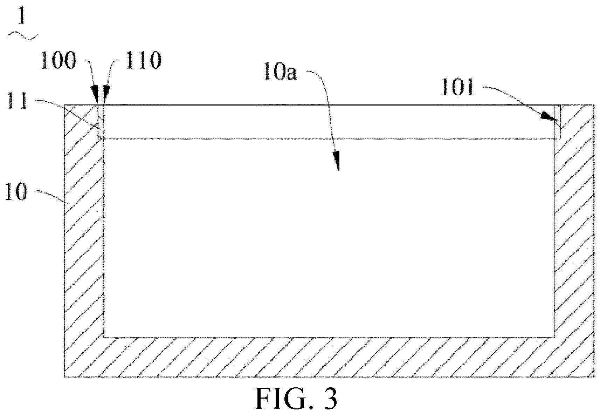

As shown in FIG. 3, since the overall thickness of the housing 1 is thin, an area of the mounting side surface 102 of the insulating base body 10 is small, in other alternative embodiments, the metal frame 11 may be provided on the inner wall surface 101 of the insulating base body 10, and the metal frame 11 may surround the circumferential portion of the opening 100 and be provided inside the opening 100, so that the connection area between the metal frame 11 and the insulating base body 10 may be larger, and the connection stability between the metal frame 11 and the insulating base body 10 may be improved. Further, since the metal frame 11 is provided on the inner wall surface 101 of the insulating base body 10, even if the metal frame 11 is weakly charged, there is no case where the housing 1 is electrically connected to the other housing 1 when the housing 1 is pressed against the other housing 1. The use safety of the housing 1 is good, and the installation range of the metal frame 11 is less limited.

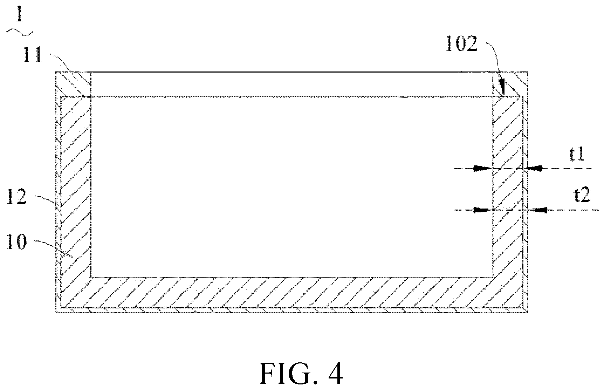

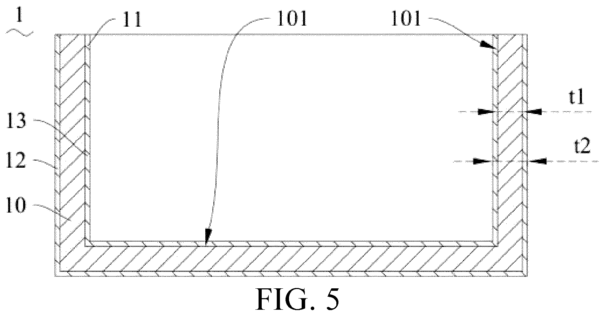

As shown in FIGS. 4 and 5, optionally, the housing 1 may further include a first metal layer 12. The first metal layer 12 is provided on the outer surface of the insulating base body 10, so that the overall structural strength of the housing 1 may be further improved by the first metal layer 12. In addition, the wear resistance of the outer surface of the housing 1 may be improved, so as to protect the structure of the insulating base body 10 and reduce the possibility that the structure of the insulating base body 10 is damaged due to an external force during use.

Alternatively, the first metal layer 12 may be formed on the outer surface of the insulating base body 10 by spraying or bonding, or the first metal layer 12 may be connected to the insulating base body 10 by injection molding on the first metal layer 12 to form the insulating base body 10.

Alternatively, the first metal layer 12 may be connected to the metal frame 11 so as to be integrally connected, thereby reducing the number of parts included in the housing 1, thereby simplifying the manufacturing and assembling process of the housing 1.

In addition, the metal frame 11 may surround the circumferential portion of the opening 100 and be provided outside the opening 100. In other words, the metal frame 11 is not connected and conducted to other conductive structures that may be located in the accommodation cavity 10a except the metal cover plate, so that when the possibility of the metal frame 11 coming into contact with the electrolyte is small, the metal frame 11 may not be weakly charged, so that the first metal layer 12 connected to the metal frame 11 is also not charged, and the risk of fire caused by the adjacent first metal layers 12 conducting electricity may be avoided when the housings 1 squeezes against an adjacent housing.

When the metal frame 11 is weakly charged as described in the aforementioned technical solution, the first metal layer 12 and the metal frame 11 are provided at intervals to prevent the first metal layer 12 from being charged, thereby avoiding the risk of fire caused by the adjacent first metal layers 12 conducting electricity when the housings 1 squeezes against the adjacent housing.

The insulating base body 10 has a thickness t1. Since the insulating base body 10 may be protected by the first metal layer 12, the requirement for structural wear resistance of the insulating base body 10 is smaller, and the thickness t1 of the insulating base body 10 may be provided thinner. The larger the thickness t1 of the insulating substrate 10, the thickness of the first metal layer 12 may be reduced while ensuring that the overall strength of the housing 1 meets the use requirements, thereby achieving a more lightweight design for the housing 1. Based on this, optionally, the thickness t1 may satisfy: 0.01 mm ≤ t1 ≤ 0.5 mm. For example, the thickness t1 may be 0.01 mm, 0.02 mm, 0.05 mm, 0.08 mm, 0.1 mm, 0.15 mm, 0.2 mm, 0.25 mm, 0.3 mm, 0.35 mm, 0.4 mm, 0.45 mm, or 0.5 mm, etc.

The housing 1 may further include a second metal layer 13 provided on the inner wall surface 101 of the insulating base body 10, and the second metal layer 13 is connected to the metal frame 11, so that the overall structural strength of the housing 1 may be further improved by the second metal layer 13. In addition, since a part of the surface of the second metal layer 13 is formed as the inner wall surface 101 of a whole of the housing 1, by connecting the second metal layer 13 to the metal frame 11, the second metal layer 13 and the metal frame 11 may be electrically conducted, and the metal cover plate may be weakly charged, so that the metal frame 11 and the second metal layer 13 may be weakly charged, so as to avoid chemical corrosion of the second metal layer 13.

In addition, the first metal layer 12 is provided at an interval from the metal frame 11 to prevent the first metal layer 12 from being charged, so that when the housing 1 and the adjacent housing 1 squeezes against each other, the risk of fire caused by the adjacent first metal layers 12 conducting electricity is avoided.

Alternatively, the second metal layer 13 may be formed on the inner wall surface 101 of the insulating base body 10 by spraying or bonding, or the second metal layer 13 may be connected to the insulating base body 10 by injection molding on the second metal layer 13 to form the insulating base body 10.

Alternatively, the second metal layer 13 may be integrally connected to the metal frame 11, thereby reducing the number of parts included in the housing 1, thereby simplifying the manufacturing and assembling process of the housing 1.

The housing 1 has a thickness t2. The smaller the thickness t2, the smaller the overall structural strength of the housing 1 is. The larger the thickness t2, the larger the space occupied by the housing 1 is. Therefore, the thickness t2 may not be too small or too large. Based on this, the thickness t2 may optionally satisfy: 0.35 mm ≦ t2 ≦ 0. 8 mm, for example, the thickness t2 may be 0.35 mm, 0.4 mm, 0.45 mm, 0.5 mm, 0.6 mm, 0.65 mm, 0.7 mm, 0.75 mm, or 0.8 mm, etc.

In order to achieving a more lightweight design for a whole of the housing 1, the thickness t1 of the insulating base body 10 may be greater, and the thickness of the first metal layer 12 may be smaller, or the total thickness of the first metal layer 12 and the second metal layer 13 may be smaller. But in order to avoid the overall thickness t2 of the housing 1 too larger to cause the space occupied by the housing 1 to be excessively large, the thickness t1 may not be excessively large. Based on this, the thickness t1 may satisfy: 0.3 mm ≤ t1 ≤ 0.5 mm, for example, the thickness t1 may be 0.3 mm, 0.32 mm, 0.34 mm, 0.35 mm, 0.36 mm, 0.38 mm, 0.4 mm, 0.42 mm, 0.44 mm, 0.45 mm, 0.46 mm, 0.48 mm, or 0.5 mm, etc.

In other embodiments, the housing 1 may further include only the second metal layer 13 and does not include the first metal layer 12. The insulating base body 10 is further reinforced only from the inner wall surface 101 of the insulating base body 10, and the structural strength of the housing 1 as a whole is further improved.

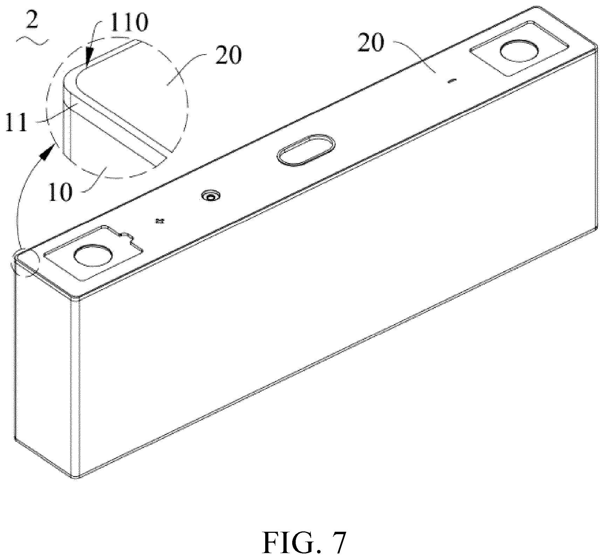

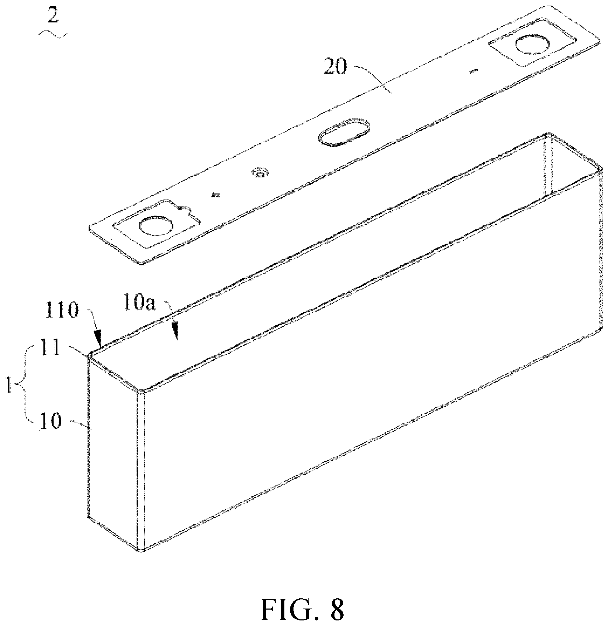

As shown in FIGS. 7 and 8, the present disclosure provides a housing assembly 2 including a metal cover plate 20. The housing assembly 2 further includes the housing 1 as described in the aforementioned technical solutions. The metal cover plate 20 is fixed to a metal frame 11 of the housing 1 and seals a through hole 110. The housing assembly 2 is provided with the housing 1 as described in the aforementioned technical solutions, so that the use safety of a battery including the housing assembly 2 is relatively high. Further, since the metal cover plate 20 and the metal frame 11 are both made of metal materials, it is convenient to fix the metal cover plate 20 to the metal frame 11 by welding. The connection stability between the metal cover plate 20 and the metal frame 11 is good, and the sealing performance of the metal cover plate 20 to seal the through hole 110 is also good.

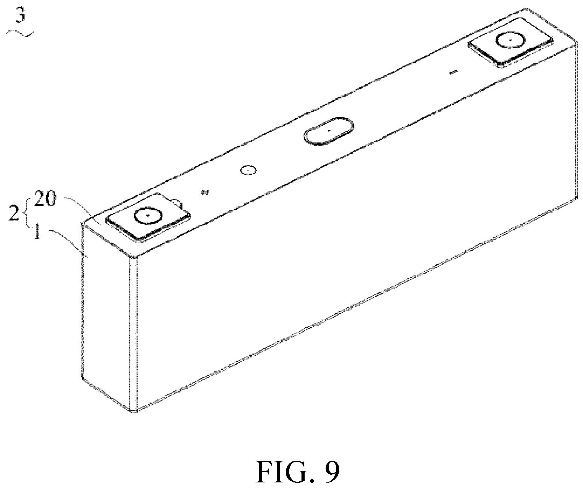

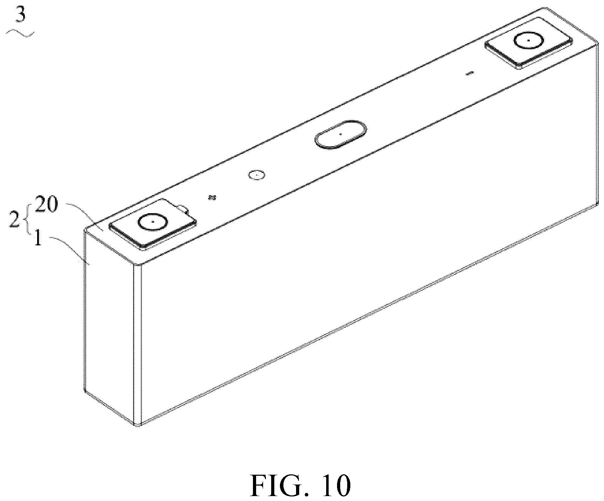

As shown in FIGS. 9 and 10, the present disclosure provides a battery 3 including a cell pack 30. The battery 3 further includes the housing assembly 2 provided in the aforementioned technical solutions. The cell pack 30 is provided in the housing 1. For example, a whole of the cell pack 30 may be provided in the accommodation cavity 10a, or a part of the cell pack 30 may be provided in the accommodation cavity 10a, and the remaining part of the cell pack 30 extends from the opening 100 (see FIG. 2) to be located between the opening 100 and the through hole 110. The battery 3 may have higher safety in use by providing the housing assembly 2 as described in the aforementioned technical solution.

## Claims

1. A housing comprising:
an insulating base body (10) comprising an accommodating cavity (10a), wherein the insulating base body (10a) comprises a mounting side surface (102) defining an opening (100) in communication with the accommodating cavity (10a); and
a metal frame (11) provided around a circumferential portion of the opening (100) and fixedly connected to the insulating base body (10), wherein a through hole (110) in communication with the opening (100) is defined by the metal frame (11), the metal frame (11) is configured to be connected to a metal cover plate (20), and the metal cover plate (20) is configured to plug the through hole (110).

2. The housing of claim 1, wherein the housing (1) further comprises a first metal layer (12) disposed on an outer surface of the insulating base body (10).

3. The housing of claim 2, wherein the insulating base body (10) has a thickness t1, and t1 is greater than or equal to 0.01 millimeters and less than or equal to 0.5 millimeters.

4. The housing of claim 2, wherein the metal frame (11) is disposed outside the opening (100), and the first metal layer (12) is connected to the metal frame (11).

5. The housing of claim 2, wherein the housing (1) further comprises a second metal layer (13) disposed on an inner wall surface (101) of the insulating base body (10), and the second metal layer (13) is connected to the metal frame (11); and
the first metal layer (12) is provided at intervals from the metal frame (11).

6. The housing of claims 2, 4 or 5, wherein the insulating base body (10) has a thickness t1, t1 is greater than or equal to 0.3 millimeters and less than or equal to 0.5 millimeters, the housing (1) has a thickness t2, and t2 is greater than or equal to 0.35 millimeters and less than or equal to 0.8 millimeters.

7. The housing of any one of claims 1 to 5, wherein the metal frame (11) projects from the mounting side surface (102).

8. The housing of claim 7, wherein a protruding height of the metal frame (11) protruding from the mounting side surface (102) is h, and h is greater than or equal to 1 millimeter and less than or equal to 10 millimeters.

9. The housing of any one of claims 1 to 5, wherein the metal frame (11) is disposed on an inner wall surface (101) of the insulating base body (10).

10. A housing assembly, comprising a metal cover plate (20), wherein the housing assembly (2) further comprises the housing (1) in any one of claims 1 to 9, the metal frame (11) of the housing (1) is connected to the metal cover plate (20), and the metal cover plate (20) plugs the through hole (110).

11. A battery, comprising a cell pack (30), wherein the battery (3) further comprises the housing assembly (2) in claim 10, the cell pack (30) is disposed within the housing (1).
